# EUROPEAN PATENT APPLICATION

(11) **EP 3 312 776 A1**
(43) Date of publication of application: **25.04.2018**
(21) Application number: 16811440.3
(22) Date of filing: 01.06.2016
(51) Int. Cl.: G06N 3/00, B25J 13/00, G05B 13/02

(54) **EMOTION CONTROL SYSTEM, SYSTEM, AND PROGRAM**

(30) Priority: 17.06.2015 JP 2015122408
(71) Applicant: Cocoro SB Corp., Tokyo 105-7309 (JP)
(72) Inventor: SON, Masayoshi, Tokyo 105-7309 (JP); TOMONAGA, Kosuke, Tokyo 105-7309 (JP)
(74) Representative: Michalski Hüttermann & Partner Patentanwälte mbB
(86) International application number: PCT/JP2016/066312
(87) International publication number: WO 2016/203965

(57) **Abstract**

It is impossible to change tastes and preferences with a robot or artificial intelligence. Provided is an emotion control system comprising an information acquiring section that acquires network content acquired from a public network; a storage section that stores effect information indicating an effect exerted on an emotion of a control target by the network content; an updating section that updates the effect information stored in the storage section, based on sensor information detected by a sensor of the control target; and an emotion control section that controls the emotion of the control target based on the network content acquired by the information acquiring section and the effect information stored in the storage section.

## Description

### BACKGROUND

### 1. TECHNICAL FIELD

The present invention relates to an emotion control system, a system, and a program.

### 2. RELATED ART

A terminal is known that learns conversation between a user and a conversational partner and accumulates the responses made by the conversational partner in response to questions from the user in a response table, as shown in Patent Document 1, for example. Furthermore, an emotion generation apparatus is known including a neural network that inputs user information, device information, and its own current emotional state and outputs a subsequent emotional state, as shown in Patent Document 2, for example. Yet further, technology is known for storing a spatial pattern in an associative memory including a plurality of electronic neurons having a layered neural network relationship with directional artificial synaptic connectivity, as shown in Patent Document 3, for example.
Patent Document 1: Japanese Patent Application Publication No. 2011-253389
Patent Document 2: Japanese Patent Application Publication No. H10-254592
Patent Document 3: Japanese Unexamined Patent Application Publication No. 2013-535067

Conventionally, there has been a problem that it is impossible to change tastes and preferences with a robot or artificial intelligence. For example, it is impossible to change the tastes and preferences by acquiring information flowing through the network or change the tastes and preferences through communication with the user.

### SUMMARY

According to a first aspect of the present invention, provided is an emotion control system comprising an information acquiring section that acquires network content acquired from a public network; a storage section that stores effect information indicating an effect exerted on an emotion of a control target by the network content; an updating section that updates the effect information stored in the storage section, based on sensor information detected by a sensor of the control target; and an emotion control section that controls the emotion of the control target based on the network content acquired by the information acquiring section and the effect information stored in the storage section.

The emotion control system may further comprise an extracting section that analyzes characters included in the network content acquired by the information acquiring section and extracts meaning content from the network content, the effect information may indicate whether the meaning content of the network content is preferable for the control target, and the emotion control section may control the emotion of the control target based on the meaning content of the network content extracted by the extracting section and the effect information stored in the storage section.

The emotion control system may further comprise a judging section that judges whether the meaning content of the network content extracted by the information acquiring section corresponds to a predetermined restricted topic, and if the judging section judges that the meaning content of the network content extracted by the extracting section corresponds to the predetermined restricted topic, the emotion control section may lower a degree by which the network content acquired by the information acquiring section affects the emotion of the control target.

The emotion control section may determine a parameter indicating the emotion of the control target using a neural network, based on the network content acquired by the information acquiring section and the effect information stored in the storage section.

A plurality of artificial neurons forming the neural network may include a plurality of emotion artificial neurons that are artificial neurons for which a current emotion of the control target is defined.

A plurality of artificial neurons forming the neural network may include an endocrine artificial neuron that is an artificial neuron for which a generation state of an endocrine substance is defined, and the emotion control section, based on a state of the endocrine artificial neuron and effect definition information, in which is determined an effect that the state of the endocrine artificial neuron has on a parameter of at least one of another artificial neuron and an artificial synapse, may update the parameter of the at least one of the other artificial neuron and the artificial synapse.

The updating section may update the effect information, such that the meaning content indicated by the sensor information detected by the sensor affects the emotion corresponding to the endocrine artificial neuron in an active state when the sensor information is detected.

The emotion control system may further comprise a meaning identifying section that identifies meaning content of words exchanged between the control target and a person who is preferred by the control target, based on the sensor information, and the updating section may update the effect information such that the content indicating the meaning content identified by the meaning identifying section affects a positive emotion.

The emotion control system may be implemented in a server connected in a communicable manner to the control target via a communication network.

According to a second aspect of the present invention, provided is a system comprising the emotion control system described above and the control target.

According to a third aspect of the present invention, provided is a program that causes a computer to function as the emotion control system described above.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows an exemplary scene where a system 10 according to the present embodiment is used.
Fig. 2 schematically shows a function block configuration of the server 60 and the robot 40.
Fig. 3 schematically shows a portion of the neural network.
Fig. 4 shows a flow chart for calculating Vₜₙ₊₁ⁱ and Sₜₙ₊₁ⁱ of the artificial neuron Nⁱ.
Fig. 5 schematically shows effect definition information that affects the parameters.
Fig. 6 is an example of information managed by the content identifying section 232.
Fig. 7 shows an example of emotion tag information attached to the content.
Fig. 8 is an example of emotion tag information 800 attached to the content.
Fig. 9 shows an exemplary process flow representing the operation from acquiring the content to updating the preference information.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

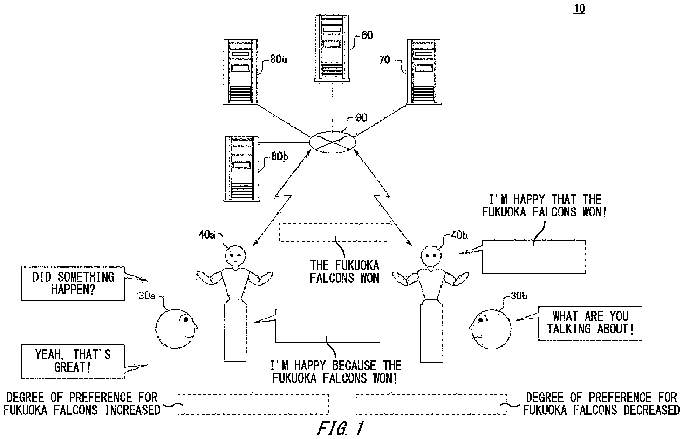

Fig. 1 schematically shows an exemplary scene where a system 10 according to the present embodiment is used. The system 10 includes a server 60, a robot 40a, and a robot 40b. The robot 40a and the robot 40b communicate and exchanges information with the server 60, via a communication network 90. The server 60 communicates with a WEB server 80a and a WEB server 80b, via the communication network 90. The communication network 90 includes a public network.

A user 30a is the user of the robot 40a. A user 30b is the user of the robot 40b. The robot 40b has substantially the same function as the robot 40a. Therefore, there are cases where the system 10 is described while referring to the robot 40a and the robot 40b simply as robots 40.

The robots 40 perform various operations such as moving the head or limbs according to the surrounding situation, conversing with the users 30, and providing video to the users 30, according to a situation. The robots 40 operate in conjunction with the server 60. For example, the robots 40 transmit sensor information such as facial images of the users 30 acquired by camera functions and voices of the users 30 acquired by microphone functions, to the server 60. The server 60 analyzes the sensor information received from the robots 40, determines the operations to be performed by the robots 40, and transmits operation information indicating the determined operations to the robots 40. The robots 40 operate according to the operation information received from the server 60. In this way, the operations of the robots 40 are controlled by the server 60. The robots 40 are an example of control targets that are controlled by the server 60.

Each robot 40 holds an emotion value indicating its own emotion. For example, the robot 40 holds an emotion value indicating the strength of each of a plurality of emotions such as "happy," "having fun," "sad," "afraid," and "excited." The emotion value of the robot 40 is determined by the server 60. The server 60 causes the robot 40 to perform an operation corresponding to the determined emotion. For example, when conversing with a user 30 in a state where the "excited" emotion value is high, the robot 40 is made to speak quickly. In this way, the robot 40 can express its own emotion through actions or the like.

The server 60 updates the current state of the robot 40 using a neural network, based on detection information received from the robot 40. The state of the robot 40 includes the emotion of the robot 40. The server 60 determines the emotion of the robot 40 using the neural network.

The WEB server 80 provides various types of public content such as the news, a weather forecast, or the like, for example. The WEB server 80 is a server that provides information of a portal site, for example. The WEB server 80a and the WEB server 80b have portal sights run by different administrators, for example. The WEB server 80a and the WEB server 80b are sometimes referred to simply as WEB servers 80.

The server 60 cyclically accesses the WEB servers 80 and acquires the content such as the news and weather forecasts distributed from the WEB servers 80. Here, exemplary operation of the server 60 and the robots 40 is described schematically using an example in which the "Fukuoka Falcons" baseball team is determined by the server 60 to be treated as a preferred target for the robot 40a and the robot 40b, and the news content that "the Fukuoka Falcons win" is acquired from the WEB servers 80 by the server 60. The server 60 determines that the robot 40a is to treat the user 30a as a preferred person and that the robot 40b is to treat the user 30b as a preferred person.

The server 60 extracts "Fukuoka Falcons," which is a preferred target for the robot 40a, and the positive word "win" from the content that is "the Fukuoka Falcons win." Accordingly, the emotion "happy" is generated by the server 60 as the emotion of the robot 40a. The server 60 then causes the robot 40a to perform an action indicating happiness. Similarly, the server 60 generates the emotion "happy" as the emotion of the robot 40b, and causes the robot 40b to perform an action indicating happiness.

Here, upon detecting that there is a question of "Did something happen?" from the user 30a using the microphone function of the robot 40a, the server 60 causes the words "I'm happy because the Fukuoka Falcons won!" to be emitted from the robot 40a. Next, upon detecting the positive words "Yeah, that's great!" from the user 30a using the microphone function of the robot 40a, the server 60 increases the degree of preference of the Fukuoka Falcons for the robot 40a. In this way, in response to the preferred user 30a of the robot 40a displaying a positive reaction to the "Fukuoka Falcons", it is possible to change the impression that the robot 40a has for the "Fukuoka Falcons" in a positive direction.

On the other hand, upon detecting the negative words "What are you talking about!" spoken by the user 30b from the information acquired with the microphone function of the robot 40b, after the robot 40b has emitted the words "I'm happy that the Fukuoka Falcons won!", the server 60 decreases the degree of preference that the robot 40b has for the Fukuoka Falcons. In this way, in response to the preferred user 30b of the robot 40b displaying a negative reaction to the "Fukuoka Falcons", it is possible to change the impression that the robot 40b has about the "Fukuoka Falcons" in a negative direction.

In this way, with the system 10, it is possible to gradually change the tastes and preferences of the robots 40. Therefore, the robots 40 can be made to behave as if they are humans learning from their environment.

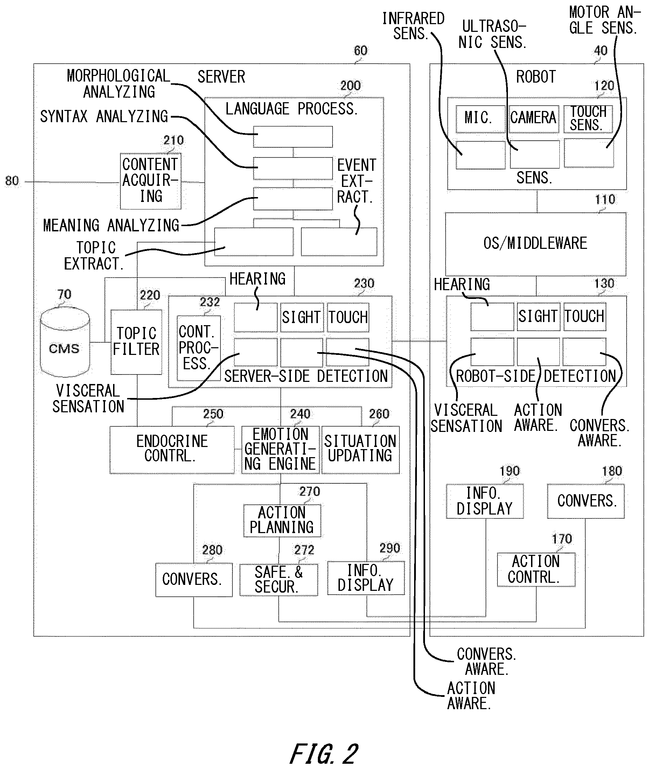

Fig. 2 schematically shows a function block configuration of the server 60 and the robot 40. The robot 40 includes a sensor section 120, an OS/middleware section 110, a robot-side detection subsystem 130, an action control subsystem 170, a conversation subsystem 180, and an information display subsystem 190. The server 60 includes a content acquiring section 210, a language processing section 200, a topic filter 220, a server-side detection subsystem 230, an endocrine control section 250, an emotion generating engine 240, a situation updating subsystem 260, an action planning subsystem 270, a safety and security subsystem 272, a conversation subsystem 280, an information display subsystem 290, and a CMS 70.

In the robot 40, the sensor section 120 includes a microphone, a camera, a touch sensor, an infrared sensor, an ultrasonic sensor, and a motor angle sensor. In the sensor section 120, the microphone detects audio in the surrounding region. For example, the microphone detects the voice of the user 30. The camera generates image information by performing imaging with visible light. The infrared sensor generates image information by performing imaging with infrared light. The infrared sensor may radiate infrared light and perform imaging with the infrared light resulting from the radiated infrared light being reflected by the subject. The ultrasonic sensor may radiate ultrasonic waves and detect the ultrasonic waves reflected by the subject. The motor angle sensor may detect the rotational angle of a shaft of a motor.

The sensor information detected using each sensor of the sensor section 120 is output to the OS/middleware section 110. The OS/middleware section 110 performs control over the entire robot 40. The OS/middleware section 110 comprehensively controls the sensor section 120, the robot-side detection subsystem 130, the action control subsystem 170, the conversation subsystem 180, and the information display subsystem 190.

The robot-side detection subsystem 130 acquires the sensor information via the OS/middleware section 110 and generates the data to be sent to the robot 40. Furthermore, the robot-side detection subsystem 130 controls each sensor of the sensor section 120. The robot-side detection subsystem 130 includes a hearing sense subsystem, a sight sense subsystem, a touch sense subsystem, a visceral sensation subsystem, an action awareness subsystem, and a conversation awareness subsystem. The hearing sense awareness subsystem mainly processes an audio signal detected by the microphone of the sensor section 120 and generates audio information. The sight sense subsystem mainly processes the image signal detected by the camera of the sensor section 120 and generates visual information. The touch sense subsystem mainly processes a touch signal detected by the touch sensor of the sensor section 120 and generates tactile information. The visceral sensation subsystem processes signals detected by each type of sensor and generates information relating to visceral sensation. The action awareness subsystem generates information relating to action awareness. The conversation awareness subsystem mainly processes audio information and generates information relating to conversation awareness. The information generated by the robot-side detection subsystem 130 is transmitted to the robot 40 and is processed by the server-side detection subsystem 230.

The action control subsystem 170 controls the actions of the robot 40 according to action control information acquired from the robot 40. For example, the action control subsystem 170 controls the motion of the limbs. The conversation subsystem 180 controls the conversation of the robot 40 according to conversation control information acquired from the robot 40. For example, the conversation subsystem 180 controls a speaker according to speech information included in the conversation control information. The information display subsystem 190 controls the display in the robot 40 according to display control information acquired from the robot 40. For example, the conversation subsystem 180 displays, in a monitor, an image or display content included in the display control information.

In the server 60, the content acquiring section 210 acquires the network content from the WEB server 80. The content acquiring section 210 is an example of an information acquiring section that acquires the network content acquired from a public network. The content acquiring section 210 acquires published web content, for example.

The language processing section 200 analyzes the content acquired by the content acquiring section 210. The language processing section 200 performs a language analysis on text information included in the content. The language processing section 200 functions as an extracting section that analyzes the text included in the network content acquired by the content acquiring section 210 and extracts the meaning content of the network content.

In one embodiment, the language processing section 200 includes a morphological analyzing section, a syntax analyzing section, a meaning analyzing section, a topic extracting section, and an event extracting section. The morphological analyzing section performs a morphological analysis on the text information. For example, the morphological analyzing section divides the text into morphological sequences and determines the parts of speech. The syntax analyzing section identifies the grammatical relationships of sentences, such as dependency, based on the morphological elements resulting from the division by the morphological analyzing section. The meaning analyzing section performs a meaning analysis based on the syntax information analyzed by the syntax analyzing section. For example, the meaning analyzing section selects a syntax tree using the meaning. The topic extracting section performs a topic analysis. For example, the topic extracting section identifies what the content is about. The event extracting section extracts a subject and an action taken by the subject.

The server-side detection subsystem 230 generates input information for the endocrine control section 250, the emotion generating engine 240, and the situation updating subsystem 260 based on the sensor information acquired from the robot-side detection subsystem 130 and the information analyzed by the language processing section 200. Specifically, the server-side detection subsystem 230 includes a hearing sense subsystem, a sight sense subsystem, a touch sense subsystem, a visceral sensation subsystem, an action awareness subsystem, and a conversation awareness subsystem as subsystems corresponding to the respective subsystems of the robot-side detection subsystem 130. The input information is generated by the server-side detection subsystem 230, based on the information processed by each subsystem. For example, the server-side detection subsystem 230 identifies a person from the sight sense information, the hearing sense information, and the like, and generates input information such as "a known person is here" or "an unknown person is here".

The server-side detection subsystem 230 further includes a content identifying section 232. The content identifying section 232 generates the input information for the endocrine control section 250, the emotion generating engine 240, and the situation updating subsystem 260 based on the information analyzed by the language processing section 200. For example, if the event extracted by the language processing section 200 is an event relating to a preferred target, the content identifying section 232 controls the endocrine control section 250 to more easily generate the emotion "happy" with the emotion generating engine 240. For example, the neural network used by the emotion generating engine 240 includes a parameter corresponding to the amount of dopamine released, and the endocrine control section 250 controls the parameters of the neural network in a manner to increase the amount of dopamine released. The content identifying section 232 holds effect information indicating the effect that the network content has on the emotion of the robot 40. The content identifying section 232 then updates the held effect information based on the sensor information detected by the sensor section 120 of the robot 40. The process for updating the degree of preference based on the sensor information and the like is described further below.

The endocrine control section 250 adjusts the parameters of the neural network used in the emotion generating engine 240. For example, the endocrine control section 250 adjusts the parameter corresponding to the amount of dopamine released. Dopamine is an example of an endocrine substance. An endocrine substance refers to a substance that is secreted in the body and transmits signals, such as neurotransmitters and hormones. Furthermore, the term endocrine refers to endocrine substances being secreted in the body. It should be noted that the endocrine substance in the robot 40 itself is one type of information exerting an effect on the operation of the robot 40, and does not mean that the robot 40 actually generates the endocrine substance. Similarly, the emotion of the robot 40 itself is one type of information exerting an effect on the operation of the robot 40, and does not mean that the robot 40 actually has emotions.

The emotion generating engine 240 generates the emotion of the robot 40 using the neural network, based on the input information from the server-side detection subsystem 230 and the parameters adjusted by the endocrine control section 250. The emotion generating engine 240 is an example of an emotion control section that controls the emotion of the robot 40 based on the network content acquired by the content acquiring section 210 and the effect information held by the content identifying section 232.

The situation updating subsystem 260 identifies the situation of the robot 40 and updates the situation, based on the input information from the server-side detection subsystem 230. The situation updating subsystem 260 identifies situations such as "being together with a known person".

The action planning subsystem 270 establishes an action plan based on the input information from the server-side detection subsystem 230 and the information relating to the emotion generated by the emotion generating engine 240. For example, the action planning subsystem 270 causes the robot 40 to assume a pose corresponding to the emotion determined by the emotion generating engine 240. The safety and security subsystem 272 judges whether the action plan determined by the action planning subsystem 270 is a safe action plan. For example, if the action plan determined by the action planning subsystem 270 does not include any action that would cause harm to the user 30, the safety and security subsystem 272 transmits the action information indicating an action in accordance with the action plan to the robot 40.

The conversation subsystem 280 generates the conversation information used by the robot 40 to converse with the user 30, based on the input information from the server-side detection subsystem 230 and the information relating to the emotion generated by the emotion generating engine 240, and transmits the conversation information to the robot 40. The conversation information includes information such as speaking content and speaking speed. The information display subsystem 290 controls the information displayed by the robot 40 based on the input information from the server-side detection subsystem 230 and the information relating to the emotion generated by the emotion generating engine 240. For example, the information display subsystem 290 causes the robot 40 to display information in order to provide the user 30 with information indicating what emotion the robot 40 is currently feeling.

The CMS 70 is a content management system. The CMS 70 stores restricted topics. The restricted topics can be exemplified by religious topics such as a religious stance, political topics such as a political stance, and polarizing topics such as war or murder. The content identifying section 232 judges whether the meaning content of the network content extracted by the language processing section 200 corresponds to a restricted topic stored in the CMS 70. If the topic filter 220 judges that the meaning content of the network content extracted by the language processing section 200 corresponds to a predetermined restricted topic, the content identifying section 232 lowers the degree by which the network content acquired by the content acquiring section 210 affects the emotion of the robot 40. For example, if the content corresponds to a restricted topic, the content identifying section 232 restricts the generation of strong emotions. As an example, the content identifying section 232 may cause the endocrine control section 250 to adjust the parameters of the neural network such that the amount of dopamine secreted is restricted. Furthermore, the content identifying section 232 may cause the endocrine control section 250 to adjust the parameters of the neural network such that the amount of serotonin secreted is increased. Yet further, if the content corresponds to a restricted topic, the content identifying section 232 may adjust the parameters of the neural network to restrict the released amount of an endocrine substance corresponding to a certain emotion such that this emotion based on the content is not generated. As yet another example, if the content corresponds to a restricted topic, the content identifying section 232 may control the endocrine control section 250 to make it easier to generate a predetermined emotion such as sadness in the emotion generating engine 240. In this way, if content such as "a war has started" is acquired, it is possible to prevent the robot 40 from having an emotion that goes against the emotions of ordinary people.

The topic filter 220 judges whether the topic of the network content extracted by the language processing section 200 corresponds to a restricted topic stored in the CMS 70. For example, if the topic corresponds to a restricted topic, the topic filter 220 may control the endocrine control section 250 to restrict the generation of strong emotions. As an example, the topic filter 220 may cause the endocrine control section 250 to adjust the parameters of the neural network in a manner to restrict the amount of dopamine secreted. Furthermore, the topic filter 220 may cause the endocrine control section 250 to adjust the parameters of the neural network in a manner to increase the amount of serotonin secreted. In this way, by having the content identifying section 232 and the topic filter 220 perform control based on the restricted topics, if the network content corresponds to a predetermined restricted topic, it is possible to reduce the degree by which the network content acquired by the content acquiring section 210 affects the emotion of the robot 40. Therefore, it is possible to prevent the robot 40 from having emotions differing from the emotions of ordinary people.

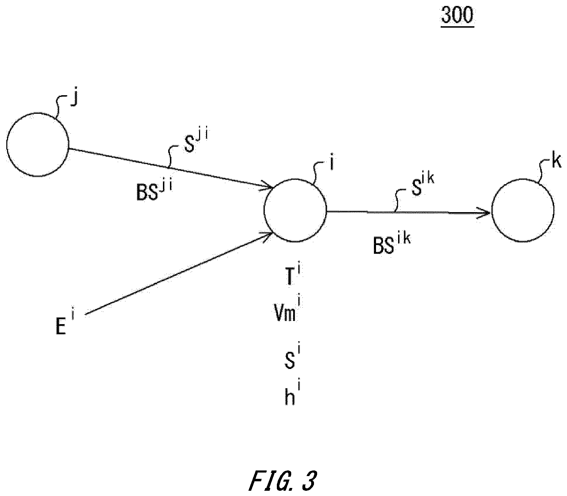

Fig. 3 schematically shows a portion of the neural network. In this drawing, in order to describe the method for calculating the parameters of the artificial neurons in the emotion generating engine 240, a portion of the neural network is shown. The portion of the neural network shown in the drawing includes the artificial neurons Nⁱ, N^{j}, and N^{k}, an artificial synapse S^{ji} connecting Nⁱ and N¹, and an artificial synapse S^{ik} connecting Nⁱ and N^{k}. The artificial neurons correspond to neurons in a living body. The artificial synapses correspond to synapses in a living body.

The parameters of the neural network include Iₜⁱ that is input for each Nⁱ of the neural network, Eₜⁱ that is input for Nⁱ from outside of the neural network, the parameter of Nⁱ, and the parameter of Sⁱ.

The parameter of Nⁱ includes Sₜⁱ indicating the status of Nⁱ, Vⁱmₜ indicating an internal state of the artificial neuron represented by Nⁱ, Tⁱₜ indicating a firing threshold value of Nⁱ, and hₜⁱ that is an increase/decrease parameter of the output from Nⁱ. The increase/decrease parameter hₜⁱ of the output is an example of a parameter for determining a time expansion of the output when the artificial neuron Nⁱ fires. In the present embodiment, the letter t appended as subscript indicates a parameter that can be updated along with the passage of time. Furthermore, Vⁱmₜ is information corresponding to a membrane potential of the artificial neuron, and is an example of a parameter indicating the internal state or output of the artificial neuron Nⁱ. The parameter of S^{ij} includes BSₜ^{ij} that indicates a bonding coefficient of the artificial synapse of S^{ij}.

The emotion generating engine 240 updates the parameters described above based on the input from the server-side detection subsystem 230 and the neural network, and calculates the internal state of each Nⁱ. In the present embodiment, Nⁱ is in a "firing" state when Vⁱmₜ exceeds the threshold value Tⁱ. When in the firing state, Vⁱmₜ rises and then falls according to the increase/decrease parameter hₜⁱ. Then, when Vⁱmₜ drops to a prescribed value Vmin, the status of Nⁱ becomes non-firing. The "firing" state is separated into a "rising phase" and a "falling phase" according to whether the internal state is rising. Furthermore, "non-firing", "rising phase", and "falling phase" are expressed by values of the status Sₜⁱ.

The state of the robot 40 is defined in the artificial neurons of the neural network used by the emotion generating engine 240. The state of the robot 40 includes the emotion of the robot 40, the generation state of the endocrine substance, the situation of the robot 40, and the like. As an example, the neural network may include a concept artificial neuron to which is assigned a situation such as "a known person is here." The neural network may include an emotion artificial neuron to which is assigned an emotion such as "happy" or "sad". The neural network may include an endocrine artificial neuron to which is assigned a dopamine generation state and an endocrine artificial neuron to which is assigned a noradrenalin generation state. Dopamine is an example of an endocrine substance involved in a reward system. Noradrenalin is an example of an endocrine substance involved in a sympathetic nervous system. In this way, the neural network may include artificial neurons defined by nerve cells.

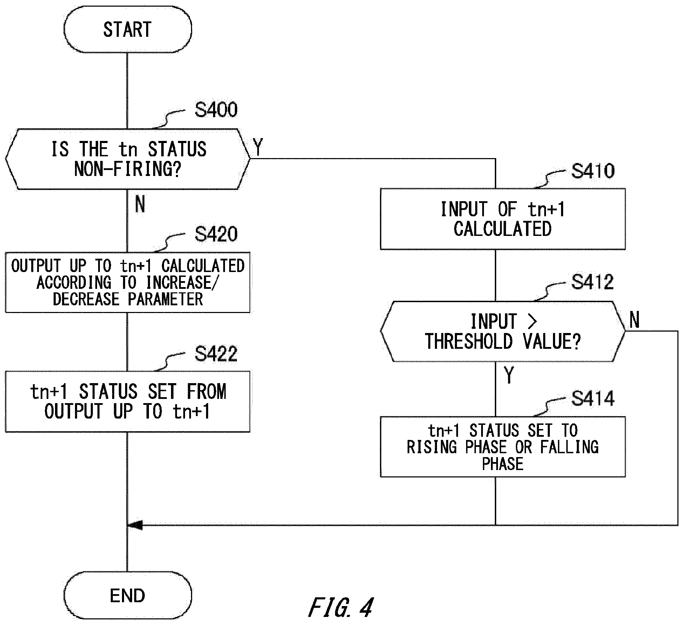

Fig. 4 shows a flow chart for calculating Vₜₙ₊₁ⁱ and Sₜₙ₊₁ⁱ of the artificial neuron Nⁱ. At S4, the emotion generating engine 240 judges whether Sₜₙⁱ indicates non-firing.

If Sₜₙⁱ indicates non-firing, the emotion generating engine 240 calculates the input Iₜₙ₊₁ⁱ for Nⁱ (S410). Specifically, if the input from outside the neural network is not connected to Nⁱ, the input is calculated as Iₜₙ₊₁ⁱ = ∑ⱼBSₜₙ₊₁^{ji}×Vmₜₙ^{j}×f(Sₜₙ^{j}). If the input from outside the neural network is connected to Nⁱ, the input is calculated as Iₜₙ₊₁ⁱ = ∑ⱼBSₜₙ₊₁^{ji}×Vmₜₙ^{j}×f(Sₜₙ^{j})+Eₜₙ₊₁ⁱ. Here, Eₜₙⁱ is the input at the timing tₙ from outside the neural network.

Here, f(S) repeats as 0 if S is a value indicating non-firing, and repeats as 1 if S is a value indicating the rising phase or falling phase. This model corresponds to a model in which the synapse transfers the activation potential only if the neuron is firing. Furthermore, f(S) = 1 may be repeated. This corresponds to a model in which the membrane potential is transferred regardless of the firing state of the neuron.

At S412, the emotion generating engine 240 judges whether Iₜₙ₊₁ⁱ exceeds Tₜₙ₊₁ⁱ. If Iₜₙ₊₁ⁱ exceeds Tₜₙ₊₁ⁱ, the emotion generating engine 240 calculates Vmₜₙ₊₁ⁱ based on the increase/decrease parameter hⁱ and sets Sₜₙ₊₁ⁱ to a value indicating the rising phase or falling phase, according to Vmₜₙ₊₁ⁱ (S414), and this flow ends. At S412, if Iₜₙ₊₁ⁱ does not exceed Tₜₙ₊₁ⁱ, the emotion generating engine 240 sets Vmₜₙ₊₁ⁱ to be equal to Iₜₙ₊₁ⁱ.

At S400, if Sₜₙⁱ is the rising phase or falling phase, the emotion generating engine 240 calculates Vmₜₙ₊₁ⁱ (S420). If Vmₜⁱ has reached Vmin by tₙ₊₁, the emotion generating engine 240 sets Sₜₙ₊₁ⁱ to the non-firing value, and if Vmₜⁱ has not reached Vmin by tₙ₊₁, the emotion generating engine 240 sets Sₜₙ₊₁ⁱ to the value of the rising phase or falling phase, and this flow ends. If Vmₜⁱ has reached Vmax by tₙ₊₁, the emotion generating engine 240 sets Sₜₙ₊₁ⁱ to the value of the falling phase, and if Vmₜⁱ has not reached Vmax by tₙ₊₁, the emotion generating engine 240 sets Sₜₙ₊₁ⁱ to the value of the rising phase.

In this way, when Nⁱ is firing, even if the output becomes less than or equal to the threshold value, the output of Nⁱ does not depend on the input. Such an interval corresponds to an absolute refractory period in all of the neurons.

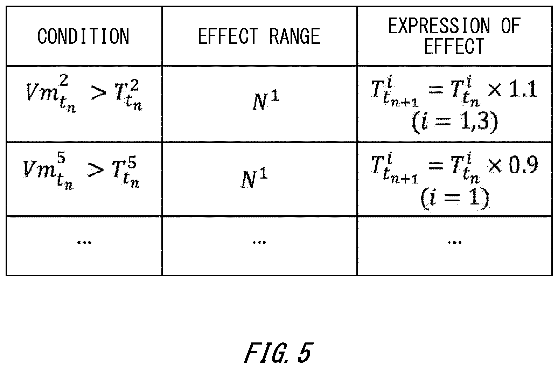

Fig. 5 schematically shows effect definition information that affects the parameters. The definition information includes a condition relating to an internal state of the endocrine artificial neuron, information defining an artificial neuron or artificial synapse that is affected, and an expression determining the effect content.

In the example of Fig. 5, N¹ is an emotion artificial neuron for which the emotion "happy" is defined and N² is an endocrine artificial neuron for which a sleep-inducing endocrine substance such as melatonin is defined. The definition information relating to N² is determined to have "Vmₜₙ² > Tₜₙ²" as the condition, "emotion artificial neuron N¹" as the artificial neuron affected by N², and "Tₜₙ₊₁ⁱ = Tₜₙⁱ×1.1" as the expression for determining the effect content. In this way, if Vmₜₙ² exceeds Tₜₙ², the emotion generating engine 240 increases the threshold value of the emotion artificial neuron N¹ at the timing tₙ₊₁ by 10%. Therefore, when drowsiness occurs, for example, it becomes more difficult for the emotion artificial neuron to fire. For example, it becomes possible to realize a phenomenon by which it becomes difficult for an emotion to increase wen the amount of accumulated charge becomes low, by determining a neural network in which the external input occurring when the "accumulated charge is less than or equal to the threshold value" is connected to the input of N².

The endocrine artificial neuron N⁵ is an endocrine artificial neuron for which the dopamine endocrine substance is defined. The definition information relating to N⁵ is determined to have "Vmₜₙ⁵ > Tₜₙ⁵" as the condition, "N¹" as the artificial neuron affected by the endocrine artificial neuron N⁵, and "Tₜₙ₊₁ⁱ = Tₜₙ¹×0.9" as the expression for determining the effect content. In this way, if Vmₜₙ⁵ exceeds Tₜₙ⁵, the emotion generating engine 240 decreases the threshold value of the emotion artificial neuron N¹ at the timing tₙ₊₁ by 10%. Therefore, when the endocrine artificial neuron N⁵ of the reward system fires, it becomes easier for the emotion "happy" to fire.

The effect definition information is not limited to the examples shown in Fig. 5. For example, as a condition, a condition that the internal state of the artificial neuron is less than or equal to a threshold value may be defined. Furthermore, a condition relating to the status of the artificial neuron, e.g. a condition relating to the rising phase, falling phase, or non-firing, may be defined. The effect range, in addition to directly designating artificial neurons and synapses, can also have a definition such as "all artificial synapses connected to a specified artificial neuron". The effect expression may be defined as, in addition to a constant multiple of a threshold value in a case where the target is an artificial neuron, an expression in which a constant is added to the threshold value or in which the increase/decrease parameter of the internal state is multiplied by a constant. If the target is an artificial synapse, in addition to defining an expression in which the increase/decrease parameter is multiplied by a constant, an expression in which a bonding coefficient is multiplied by a constant may be defined.

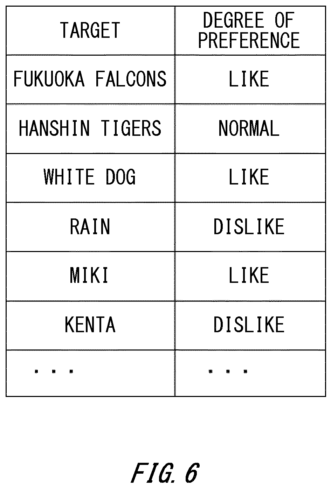

Fig. 6 is an example of information managed by the content identifying section 232. The content identifying section 232 manages targets and degrees of preference in association with each other. In the example of this drawing, the degree of preference "like" is associated with the target "Fukuoka Falcons".

As an example, if "the Fukuoka Falcons won" is extracted from the content, the content identifying section 232 instructs the endocrine control section 250 to more easily generate the emotion "happy". For example, the content identifying section 232 may make it easier to fire an endocrine artificial neuron for which dopamine is designated, such that it is easier for an emotion artificial neuron for which the emotion "happy" is designated to fire.

If the internal state of an endocrine artificial neuron for which dopamine is defined is increased in response to the robot 40 being made to say a positive phrase about the "Fukuoka Falcons", the content identifying section 232 increases the degree of preference corresponding to the "Fukuoka Falcons". For example, the content identifying section 232 associates the degree of preference "love" with the "Fukuoka Falcons".

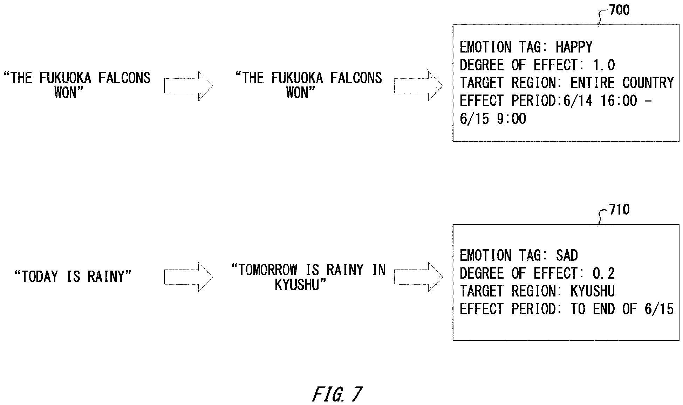

Fig. 7 shows an example of emotion tag information attached to the content. The emotion tag information includes an emotion tag, a degree of the effect for the emotion, a target region, and an effect period.

The emotion tag is information indicating the emotion that is affected. For example, when describing the emotion tag relating to the emotion tag information 700, if the event that the "Fukuoka Falcons" have "won" is extracted from the phrase "the Fukuoka Falcons won" by the language processing section 200, since the degree of preference "like" is associated with the "Fukuoka Falcons" and "won" is a positive event, the emotion tag "happy" is determined for the emotion tag information 700.

The degree of effect is information indicating the degree by which the emotion specified by the emotion tag is affected. The degree of effect has a value from 0 to 1. When described in relation to the emotion tag information 700, the event extracted by the language processing section 200 is the significant event "won", and therefore the degree of effect is determined to be 1.0.

The target region is information indicating which region including a robot 40 is affected. When described in relation to the emotion tag information 700, fans of the "Fukuoka Falcons" exist through the entire country, and therefore an event concerning the "Fukuoka Falcons" is country-wide. Therefore, "entire country" is determined as the target region.

The effect period is information indicating the period during which the emotion is affected. When described in relation to the emotion tag information 700, the "Fukuoka Falcons" have another game the following day, and therefore the effect period is determined to be until a prescribed time on the following day.

If it were assumed that the extracted event was "lost", "sad" can be determined as the emotion tag. This is because the emotion "sad" can occur in response to a negative event for a preferred target. If it were assumed that the degree of preference "dislike" was associated with "Fukuoka Falcons", "sad" can be determined as the emotion tag. This is because the emotion "sad" can occur in response to a positive event for a non-preferred target. If it were assumed that "dislike" was associated with the "Fukuoka Falcons" and the extracted event was "lost", "happy" can be determined as the emotion tag. This is because the emotion "happy" can occur in response to a negative event for a non-preferred target.

When described in relation to the emotion tag information 710, the degree of preference "dislike" is associated with "rainy" from the phrase "tomorrow is rainy in Kyushu", and therefore "sad" is determined as the emotion tag. Since the effect of rain on activities is relatively small, 0.2 is determined as the effect degree. Since the region where it will rain is Kyushu, "Kyushu" is determined as the target region. Since the event is "tomorrow", until the end of the day tomorrow is determined as the effect period.

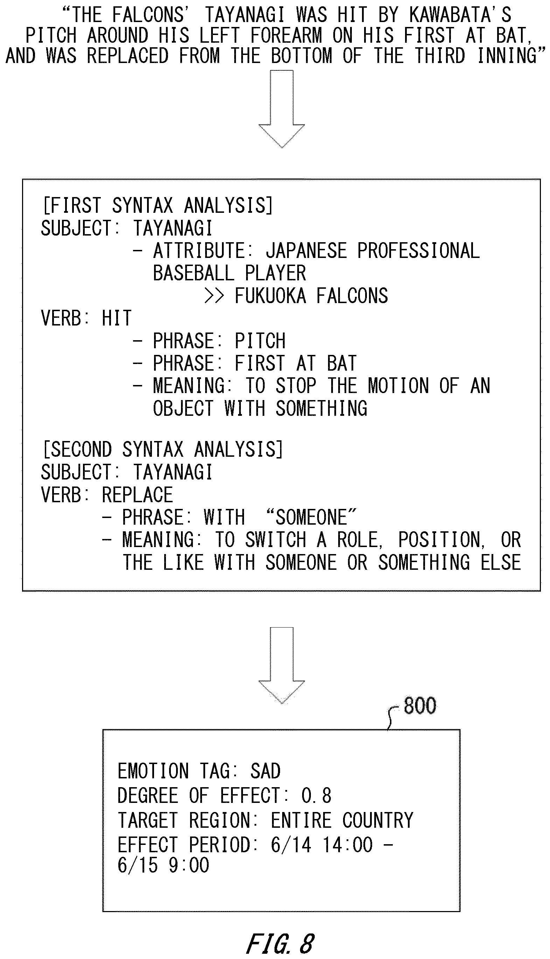

Fig. 8 is an example of emotion tag information 800 attached to the content. The emotion tag information 800 is emotion tag information obtained from the phrase "The Falcons' Tayanagi was hit by Kawabata's pitch around his left forearm on his first at bat, and was replaced from the bottom of the third inning". Here, a description is provided in which the emotion tag "sad" is determined according to the language analysis.

According to a syntax analysis of the first portion of this phrase using a head-driven phrase structure grammar (HPSG) analysis in the language processing section 200, the subject "Tayanagi" is identified as belonging to the "Fukuoka Falcons". Accordingly, the subject is judged to be a target that is liked, and the subject is judged to be a preferred target. Furthermore, the verb "hit" is identified as being connected to "pitch". Accordingly, "hit by ... pitch" is judged to be a negative event.

According to a syntax analysis of the second portion of this phrase, the subject is "Tayanagi" and the verb is "replaced". In the same manner as in the first portion of the phrase, the subject of the second portion of the phrase is also determined to be a preferred target. Furthermore, the verb "replaced" is judged to be a negative event.

In this way, the first portion of the phrase and the second portion of the phrase both indicate a negative event for a liked target, and therefore "sad" is determined as the emotion tag of the emotion tag information 800.

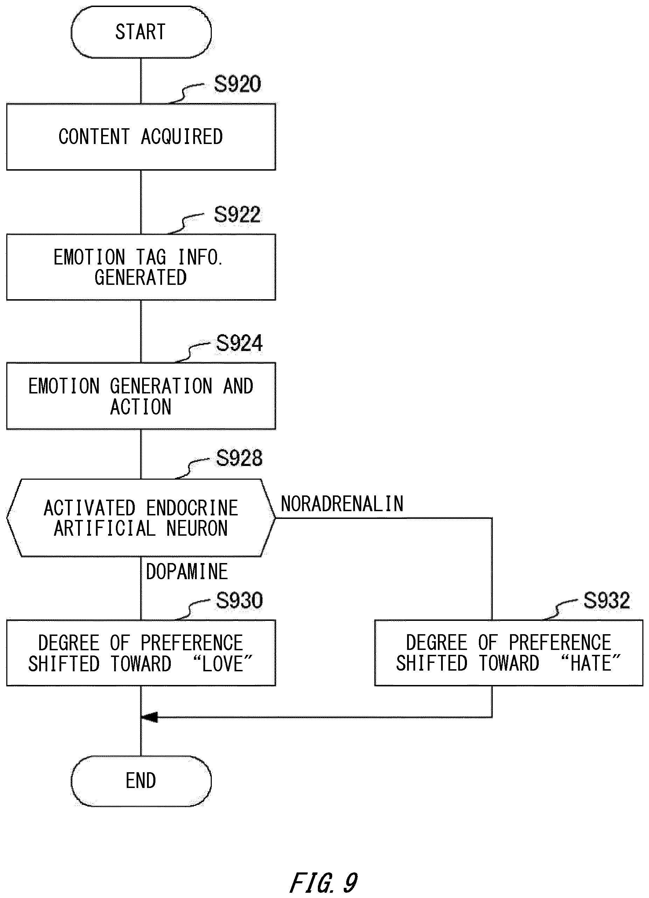

Fig. 9 shows an exemplary process flow representing the operation from acquiring the content to updating the preference information. The content acquiring section 210 acquires the content from the WEB server 80 (S920). The acquired content is analyzed by the language processing section 200, and the content identifying section 232 generates the emotion tag information based on the analysis results from the language processing section 200 (S922).

In S924, the emotion of the robot 40 is generated by the emotion generating engine 240 and the actions of the robot 40 are determined by the action planning subsystem 270 (S924). The emotion calculated by the emotion generating engine 240 is affected according to the emotion tag information.

In S928, the endocrine artificial neuron to be activated is specified according to the actions relating to the target, e.g. the "Fukuoka Falcons", with which the degree of preference is associated. If an endocrine artificial neuron for which dopamine is defined is activated, the degree of preference for the target is shifted toward "love" (S930). On the other hand, if an endocrine artificial neuron for which noradrenalin is defined is activated, the degree of preference for the target is shifted toward "hate" (S932).

In this way, if the head of the robot 40 is patted by the user 30 in response to the action "I'm happy that the Fukuoka Falcons won", for example, a positive endocrine artificial neuron is activated, and the degree of preference for the "Fukuoka Falcons" can change from "like" to "love". On the other hand, if the user shouts "What are you talking about!" or smacks the robot 40 lightly on the head, 30 in response to the action "I'm happy that the Fukuoka Falcons won", for example, a negative endocrine artificial neuron is activated, and the degree of preference for the "Fukuoka Falcons" can change from "like" to "normal".

In this way, with the system 10, it is possible to gradually change the tastes and preferences of the robot 40 based on the information obtained by the robot 40 from its environment. Therefore, it is possible for the robot 40 to be made to behave as if it is a human learning from its environment.

The function of the server 60 may be implemented by one or more computers. At least part of the function of the server 60 may be implemented by a virtual machine. At least part of the function of the server 60 may be implemented in the cloud. The function of the server 60 can be implemented by causing a CPU to operate based on a program. For example, at least part of the processing described as the operation of the server 60 can be realized by a processor controlling each piece of hardware (e.g. a hard disk, memory, and the like) of a computer, according to a program. In this way, by having a processer operate according to a program and control each piece of hardware, at least part of the processing of the server 60 can be realized by having each piece of hardware such as the processor, hard disk, and memory operate together with the program. In other words, the program can cause a computer to function as each configurational element of the server 60. The computer may read the program for controlling the execution of the processing described above, operate according to the program, and execute this processing. The computer can read this program from a computer-readable storage medium that stores this program. This program may be supplied to the computer through a communication line, and the computer may read the program supplied through the communication line.

In the present embodiment described above, the server 60 that is different from the robot 40 handles the processing of the neural network. However, the robot 40 itself may handle the functions of the server 60, such as the processing of the neural network. Furthermore, the robot 40 is an example of a device serving as a control target of the server 60. The device that is a control target is not limited to being a robot 40, and there can be various control targets such as home electric appliances, vehicles, and toys.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### List of Reference Numerals

10: system, 30: user, 40: robot, 60: server, 90: communication network, 200: language processing section, 210: content acquiring section, 220: topic filter, 230: server-side detection subsystem, 232: content identifying section, 240: emotion generating engine, 250: endocrine control section, 260: situation updating subsystem, 270: action planning subsystem, 272: safety and security subsystem, 280: conversation subsystem, 290: information display subsystem, 700, 710, 800: emotion tag information

## Claims

1. An emotion control system comprising:
an information acquiring section that acquires network content acquired from a public network;
a storage section that stores effect information indicating an effect exerted on an emotion of a control target by the network content;
an updating section that updates the effect information stored in the storage section, based on sensor information detected by a sensor of the control target; and
an emotion control section that controls the emotion of the control target based on the network content acquired by the information acquiring section and the effect information stored in the storage section.

2. The emotion control system according to Claim 1, further comprising:
an extracting section that analyzes characters included in the network content acquired by the information acquiring section and extracts meaning content from the network content, wherein
the effect information indicates whether the meaning content of the network content is preferable for the control target, and
the emotion control section controls the emotion of the control target based on the meaning content of the network content extracted by the extracting section and the effect information stored in the storage section.

3. The emotion control system according to Claim 2, further comprising:
a judging section that judges whether the meaning content of the network content extracted by the information acquiring section corresponds to a predetermined restricted topic, wherein
if the judging section judges that the meaning content of the network content extracted by the extracting section corresponds to the predetermined restricted topic, the emotion control section lowers a degree by which the network content acquired by the information acquiring section affects the emotion of the control target.

4. The emotion control system according to any one of Claims 1 to 3, wherein
the emotion control section determines a parameter indicating the emotion of the control target using a neural network, based on the network content acquired by the information acquiring section and the effect information stored in the storage section.

5. The emotion control system according to Claim 4, wherein
a plurality of artificial neurons forming the neural network include a plurality of emotion artificial neurons that are artificial neurons for which a current emotion of the control target is defined.

6. The emotion control system according to Claim 4 or 5, wherein
a plurality of artificial neurons forming the neural network include an endocrine artificial neuron that is an artificial neuron for which a generation state of an endocrine substance is defined, and
the emotion control section, based on a state of the endocrine artificial neuron and effect definition information, in which is determined an effect that the state of the endocrine artificial neuron has on a parameter of at least one of another artificial neuron and an artificial synapse, updates the parameter of the at least one of the other artificial neuron and the artificial synapse.

7. The emotion control system according to Claim 6, wherein
the updating section updates the effect information, such that meaning content indicated by the sensor information detected by the sensor affects the emotion corresponding to the endocrine artificial neuron in an active state when the sensor information is detected.

8. The emotion control system according to any one of Claims 1 to 6, further comprising:
a meaning identifying section that identifies meaning content of words exchanged between the control target and a person who is preferred by the control target, based on the sensor information, wherein
the updating section updates the effect information such that the content indicating the meaning content identified by the meaning identifying section affects a positive emotion.

9. The emotion control system according to any one of Claims 1 to 7, wherein
the emotion control system is implemented in a server connected in a communicable manner to the control target via a communication network.

10. A system comprising:
the emotion control system according to Claim 9; and
the control target.

11. A program that causes a computer to function as the emotion control system according to any one of Claims 1 to 9.
